**Europäisches Patentamt**

**European Patent Office**

**Office européen des brevets**

(19)

(11) Numéro de publication : **0 089 255 B1**

(12) **FASCICULE DE BREVET EUROPÉEN**

(45) Date de publication du fascicule du brevet :
03.12.86

(51) Int. Cl.⁴ : **B 01 D 15/08**, G 01 N 30/60

(21) Numéro de dépôt : **83400372.5**

(22) Date de dépôt : **23.02.83**

(54) Dispositif de chromatographie et procédé de mise en oeuvre.

(30) Priorité : 25.02.82 FR 8203177

(43) Date de publication de la demande :
21.09.83 Bulletin 83/38

(45) Mention de la délivrance du brevet :
03.12.86 Bulletin 86/49

(84) Etats contractants désignés :
AT BE CH DE FR GB IT LI LU NL SE

(56) Documents cités :
FR-A- 2 219 797
FR-A- 2 250 556
FR-A- 2 369 861
FR-A- 2 445 965

(73) Titulaire : INSTRUMENTS S.A.
25, avenue de l'Opéra
F-75001 Paris (FR)

(72) Inventeur : Quemerais, Claude
Résidence les Glatignies 1 allée Charles Peguy
F-95120 Ermont (FR)
Inventeur : Fossey, Pierre
40, rue Jules Massenet
F-92500 Rueil-Malmaison (FR)

(74) Mandataire : Phélip, Bruno et al
c/o Cabinet Harlé & Phélip 21, rue de la Rochefoucauld
F-75009 Paris (FR)

## Description

La présente invention est relative à un dispositif ou système de chromatographie et à un procédé de mise en œuvre de ce dispositif.

L'invention est relative plus particulièrement à un système complet de chromatographie préparative en phase liquide sous pression qui permet d'aborder la chromatographie d'un mélange quelconque solide ou liquide depuis le remplissage de la colonne jusqu'à la collecte des produits séparés et quel que soit le type de chromatographie à faire intervenir : adsorption, partage, échange d'ions ou exclusion moléculaire.

La chromatographie préparative présente comme on sait des problèmes particuliers du fait de l'utilisation de colonne présentant un diamètre nettement plus élevé que les autres dispositifs de chromatographie.

On rencontre essentiellement des problèmes au niveau de l'efficacité de la colonne elle-même, du mode d'injection du solvant et du soluté et au niveau de la circulation du solvant dans la colonne.

La présente invention apporte une solution à ces problèmes et permet d'améliorer les performances de la colonne et son efficacité.

L'invention apporte également une nouvelle solution aux problèmes de détection et de collecte posés par ce type de chromatographie.

Les colonnes étaient à leur origine remplies avec une phase stationnaire sèche et on cherchait à diminuer le volume interstitiel entre les grains de la phase stationnaire en tapotant ou en vibrant la colonne. On cherchait ainsi à réduire le volume interstitiel entre les grains.

On a ensuite pensé à remplir les colonnes avec une phase stationnaire humide. L'utilisation d'une phase stationnaire humide présente cependant l'inconvénient résultant de la décantation sélective des particules en fonction de leur granulométrie ce qui a conduit les utilisateurs à pousser la phase stationnaire humide avec un liquide sous pression.

L'utilisation d'un liquide sous pression présente toutefois l'inconvénient d'être tributaire des manipulateurs et elle donne des résultats satisfaisants uniquement pour des colonnes de petit diamètre.

On a également proposé d'utiliser une compression axiale ou radiale soit centrifuge soit centripède pour améliorer l'efficacité des colonnes. C'est ainsi que l'on a proposé la compression axiale qui doit être maintenue pendant la chromatographie elle-même. Un tel dispositif comprend notamment un corps coulissant perméable aux gaz ou aux liquides qui applique une pression sur la phase stationnaire présente dans un tube qui comporte à l'autre extrémité un couvercle perméable aux liquides et aux gaz et communiquant avec l'extérieur tout comme le corps coulissant lui-même. Ce type de dispositif présente cependant l'inconvénient d'assécner la phase stationnaire au niveau de l'application de la pression par le corps coulissant. Par ailleurs, l'utilisation d'un

tel corps coulissant présente des problèmes de fuite de solvants, qui sont souvent très corrosifs et dangereux.

Ce type de dispositif est enfin appliqué tout au long de la chromatographie ce qui entraîne des dépenses d'énergie et peut avoir tendance à modifier la compacité de la phase stationnaire au cours de la chromatographie elle-même à la suite de l'introduction du solvant ou du soluté dans la colonne en vue de la séparation.

Parmi les documents illustrant l'arrière-plan technologique de l'invention, on peut citer FR-A-2 219 797, FR-A-2 250 556, FR-A-2 369 861 et FR-A-2 445 965.

Les inventeurs ont découvert maintenant un moyen permettant de remédier aux inconvénients antérieurs par l'utilisation d'un poste de remplissage comparable au poste de remplissage des colonnes analytiques sous pression à la différence fondamentale près que la phase stationnaire est comprimée dans le tube de la colonne par un corps solide non poreux à la place d'un liquide.

Grâce à ce moyen il est possible d'améliorer les performances des colonnes de façon considérable en évitant les inconvénients mentionnés pour les procédés antérieurs. On évite ainsi notamment les gradients de granulométrie, l'écoulement des éluats à travers le piston et on améliore de façon considérable l'efficacité de la colonne qui est un critère très important, étant donné que la finesse de la séparation est tributaire de l'efficacité et de la possibilité de séparer des produits suivant leurs temps de rétention variables dans la colonne.

Pour ce qui concerne l'injection des liquides, les procédés antérieurs présentaient essentiellement des problèmes de répartition non homogènes sur toute la surface de la colonne résultant d'un gradient de vitesse linéaire du soluté et du solvant à l'intérieur de la colonne et d'autre part des effets de paroi qui font que le soluté qui migre dans la colonne avance plus vite le long de la paroi que le soluté qui migre à l'intérieur de la phase stationnaire.

La présente invention vise également à remédier à ce problème qui est résolu d'une part par l'utilisation d'une colonne qui a été remplie par le poste de remplissage défini ci-dessus et par ailleurs par l'utilisation d'une tête d'injection comportant des moyens permettant de former un tube de solvant le long de la paroi et des moyens permettant d'injecter le soluté latéralement de façon à ce que les jets se brisent les uns sur les autres de façon radiale et diffusent à travers la tête de façon uniforme.

Au niveau de la circulation du solvant le problème le plus important a été celui de la pulsation de la pompe. Les inventeurs ont résolu ce problème en mettant en œuvre, de préférence, une pompe à quatre pistons à 90° actionnée par des cames ou des bielles donnant un débit parfaitement linéaire et totalement écrêté pour une vitesse de rotation uniforme de l'arbre à came.

Les différents moyens en combinaison permettent d'améliorer de façon considérable l'efficacité et la précision de la séparation de la colonne chromatographique.

En plus des moyens énumérés ci-dessus, la demanderesse a également mis au point des moyens permettant d'améliorer la détection ainsi que la collection des fractions.

La présente invention a donc pour objet un système de chromatographie d'une efficacité améliorée.

Un autre objet de l'invention est constitué par un procédé de mise en œuvre de ce système au cours d'une chromatographie préparative en phase liquide sous pression.

D'autres objets de l'invention apparaîtront à la lecture de la description qui suivent.

Le système de chromatographie préparatoire en phase liquide conforme à la présente invention comprend une colonne sous forme d'un tube cylindrique muni à sa partie inférieure d'un couvercle comportant un disque permettant le passage des liquides ou des gaz et arrêtant les particules solides, une pompe, un dispositif de détection et un collecteur de fractions relié au dispositif de détection et est caractérisé par le fait qu'il comprend :

a) un dispositif de remplissage destiné à être relié à la colonne par une buse de compression dont la hauteur minimale est égale au tiers de la hauteur de la colonne et comprenant un vérin actionnant un corps solide non poreux permettant de comprimer la phase stationnaire remplissant ladite colonne par l'intermédiaire de la buse de compression,

b) une tête d'injection reliée à la pompe et destinée à être fixée sur la colonne après son remplissage, ladite tête d'injection comprenant une paroi inférieure constituée par une plaque percée d'alvéoles associée à un disque de billes frittées disposé sous la plaque alvéolaire et un boîtier d'injection d'un diamètre inférieur à la tête d'injection muni de plusieurs arrivées latérales de soluté entraînant une dispersion radiale du soluté dans le boîtier d'injection situé au-dessus de la plaque alvéolaire, ladite tête d'injection comportant sur la face supérieure une arrivée centrale de solvant et des moyens permettant au solvant de contourner le boîtier d'injection pour que le solvant forme un film le long de la paroi intérieure de la colonne.

Selon une réalisation préférentielle, le boîtier d'injection comporte au moins six arrivées latérales.

La tête d'injection a de préférence un rapport de la surface de diamètre de l'arrivée centrale sur la surface de diamètre des arrivées latérales proportionnelle à la surface de l'anneau compris entre le diamètre de la colonne et le diamètre du boîtier d'injection sur le diamètre du boîtier d'injection.

La tête d'injection est reliée conformément à l'invention à une pompe qui peut comprendre quatre pistons actionnés par des cames ou des bielles disposées à 90°, les unes par rapport aux autres et dont le support n'est pas solidaire du bloc comprenant les quatre têtes de pompe — un bloc comportant quatre têtes de pompe munies chacune d'un clapet d'aspiration et d'un clapet de refoulement non solidaire du support moteur-arbre à came.

Ledit bloc est disposé de façon préférentielle sur des glissières et peut être translaté d'une longueur égale à la profondeur d'une chambre de tête de pompe au moyen d'un vernier gradué en millilitre par exemple.

Conformément à l'invention chacune des quatre chambres des têtes de pompe est comprimée successivement ce qui a pour effet de donner un débit parfaitement linéaire totalement écrêté pour une vitesse de rotation de l'arbre à came qui peut être par exemple égale à 1 tour/sec.

Le dispositif de détection qui permet encore d'améliorer les performances de la colonne de chromatographie est essentiellement caractérisé par le fait qu'il s'agit d'un montage en double détection par absorptiométrie et réfractométrie sur une cuve unique comprenant une cuve de détection soumise à des rayonnements infrarouges et ultraviolets perpendiculaires l'un par rapport à l'autre dans un plan différent ou non.

La cuve de détection comprend quatre faces polies dont deux sont en quartz qualité infrarouge, les deux autres étant en quartz qualité ultraviolet — un bloc de double détection basse tension, la haute tension de la lampe source des rayonnements U.V. étant renvoyée à l'extérieur au moyen de fibres optiques.

Les inventeurs ont en effet constaté que la double détection présente souvent des problèmes du fait que le solvant qui a été comprimé par la pompe circule dans la colonne sous haute pression pour atteindre la cuve du détecteur ultraviolet. A la sortie de la cuve le solvant s'expanse et l'on constate la formation de bulles qui vont perturber la détection réfractométrique. Si l'on inverse l'ordre du détecteur, le dégazage dans la cuve ultraviolet ne gêne pas la détection mais les variations de pression qu'entraîne ce dégazage perturbent la détection réfractométrique placée en amont et l'on a l'apparition d'un bruit de fond important.

Le montage en double détection susdéfini réalisé à partir d'une cuve unique consiste donc essentiellement à mesurer la différence d'indice de réfraction à partir d'une source infrarouge basse tension sur un appareil réfractométrique courant possédant une cuve à double circulation (échantillon et référence). Le montage conforme à l'invention a été effectué à partir des sources ultraviolettes soit en direct sur la sortie d'un monochromateur à réseau holographique par exemple. On capte le rayonnement dans une fibre UV 200 QSF d'une longueur d'environ 2 m ou plus, et on dirige ce rayonnement perpendiculairement au rayonnement infrarouge dans la cuve et dans un plan différent. En utilisant par exemple une fibre qui possède une ouverture numérique de 0,4 au moyen d'un système de lentille dont les distances focales sont de 2,3 mm par exemple on rend au travers de la cuve le rayonnement parallèle puis on le fait reconverger vers une fibre UV 1 000 QSF par exemple pour acheminer le rayonnement vers un photomultiplicateur classique.

Les inventeurs ont enfin amélioré au point de vue efficacité et sécurité la collecte des fractions. En effet, il n'existe aucun collecteur de fraction dont le mécanisme ne serait pas électrifié. De la pompe jusqu'au collecteur de fraction passant par l'injection, la colonne et la détection, le solvant est enfermé dans des tubulures ou des chambres étanches alors qu'au niveau du collecteur il est versé dans des récipients et peut s'expanser et dégazer provoquant ainsi une atmosphère déflagrante. En plus, en cas de panne du mécanisme, les récipients peuvent déborder et inonder les compartiments électriques, très souvent situés en dessous du récipient.

L'invention prévoit donc un collecteur de fraction totalement pneumatique simple d'emploi, peu onéreux. Ce collecteur est essentiellement caractérisé par le fait qu'il comprend deux compartiments. Dans le compartiment inférieur un vérin actionne par un mouvement de va-et-vient un axe dans lequel on a placé deux cliquets en opposition de rotation en vue de l'entraînement d'une poulie munie d'une courroie d'un angle de rotation fixe dans un seul sens de rotation. Le compartiment supérieur est équipé de préférence en son centre d'un axe creux entraîné par la courroie définie ci-dessus et muni d'un raccord tournant d'alimentation pneumatique. Cette alimentation permet au vérin disposé à la partie supérieure de l'axe creux et perpendiculairement à celui-ci, de présenter le capillaire du solvant devant les récipients de collecte ou devant un bac d'évacuation.

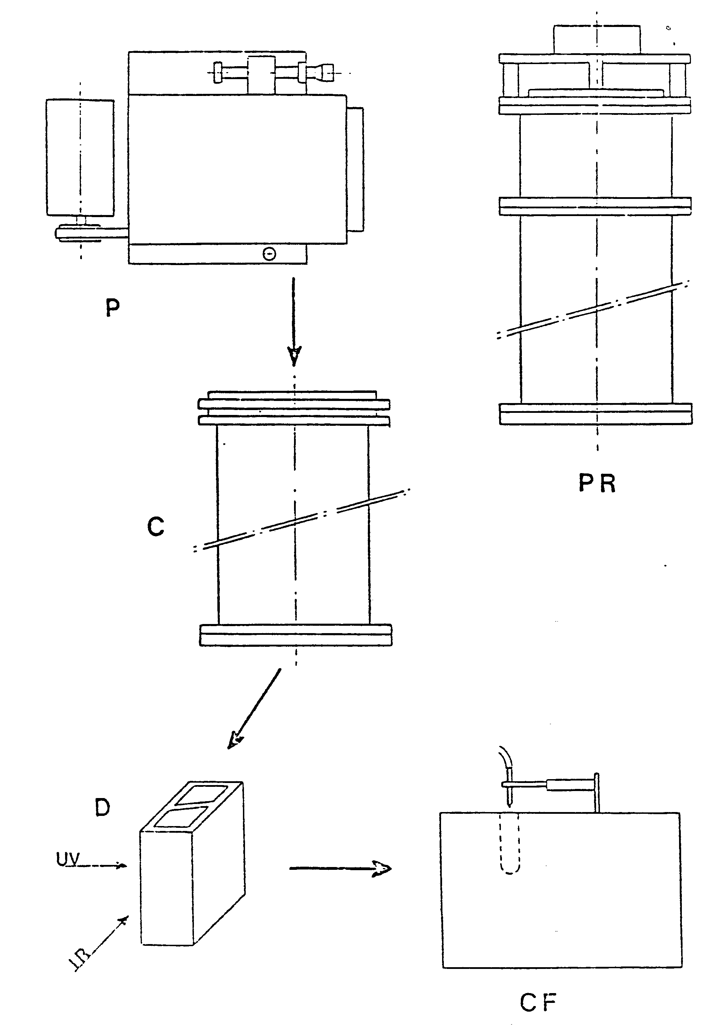

Un exemple de réalisation schématisé d'un dispositif de chromatographie conforme à l'invention sera décrit ci-dessous. La fig. 10 représente une représentation schématique du procédé permettant la mise en œuvre du dispositif de chromatographie susdéfini. Après avoir confectionné la colonne C dans le poste de remplissage PR, le solvant va être véhiculé à partir de la pompe P à travers la colonne C, passe dans la cuve de détection D et s'écoule dans le collecteur de fractions CF.

D'autres particularités de l'invention apparaîtront dans la description qui va suivre d'un mode de réalisation pris comme exemple et représenté sur le dessin annexé, sur lequel :

la figure 1 est une vue schématique en coupe du poste de remplissage de la colonne de chromatographie en phase liquide préparative ;

la figure 2 est une vue schématique en coupe de la colonne préparative après avoir été désolidarisée du poste de remplissage et munie de la tête d'injection ;

la figure 3 est une vue schématique en projection de la plaque alvéolaire ;

la figure 4 est une vue schématique en projection du boîtier d'injection et des arrivées latérales :

la figure 5 est une vue schématique en coupe et en projection de la pompe à quatre pistons pour chromatographie en phase liquide ;

les figures 6, 7 et 8 sont des vues schématiques de la cuve unique à double détection absorptiométrie et réfractométrie vue de face 6, vue de côté 7 et vue de dessus 8 ;

la figure 9 est une vue schématique en coupe et en projection du collecteur de fraction pneumatique antidéflagrant.

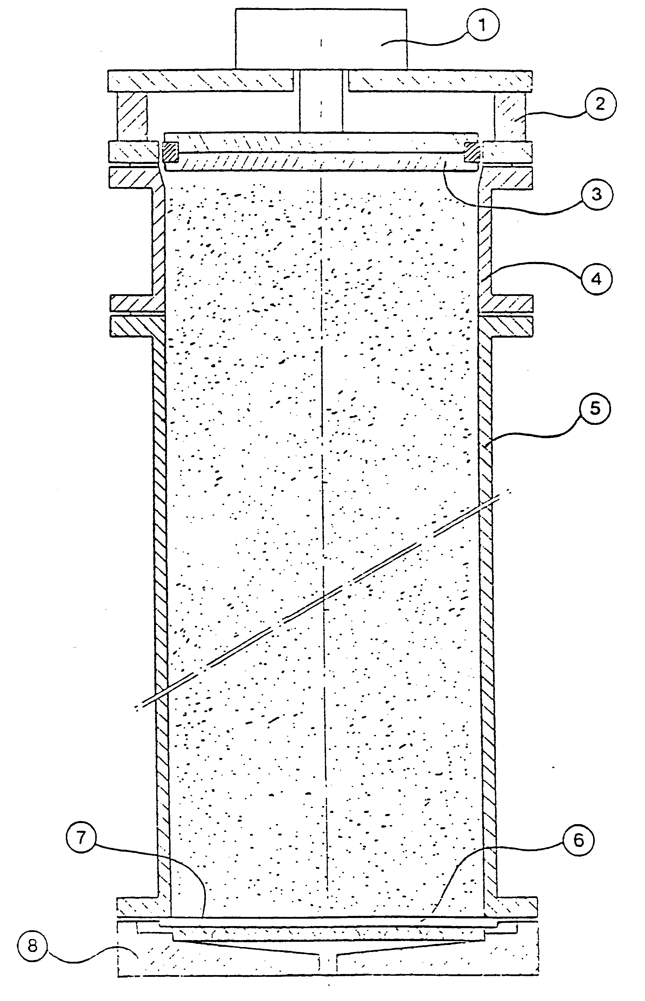

Sur la fig. 1, le vérin 1 pneumatique, hydraulique, à vis ou autre est fixé à la buse de compression 4 par un étrier 2. Le vérin 1 actionne le corps solide non poreux 3 à l'intérieur de la buse de compression 4.

La course du vérin 1 est égale à la longueur de la buse de compression 4 ou inférieure. La colonne à remplir de phase stationnaire 5 est munie d'un couvercle inférieur 8 muni d'une plaque alvéolaire 7 de récupération des solutés et surmontée immédiatement d'un disque de billes frittées 6 de préférence en acier inoxydable. L'étanchéité au niveau du raccordement de la buse de compression 4 à la colonne et au niveau de raccordement de la colonne 5 au couvercle 6 est réalisée au moyen de joints plats par exemple en téflon.

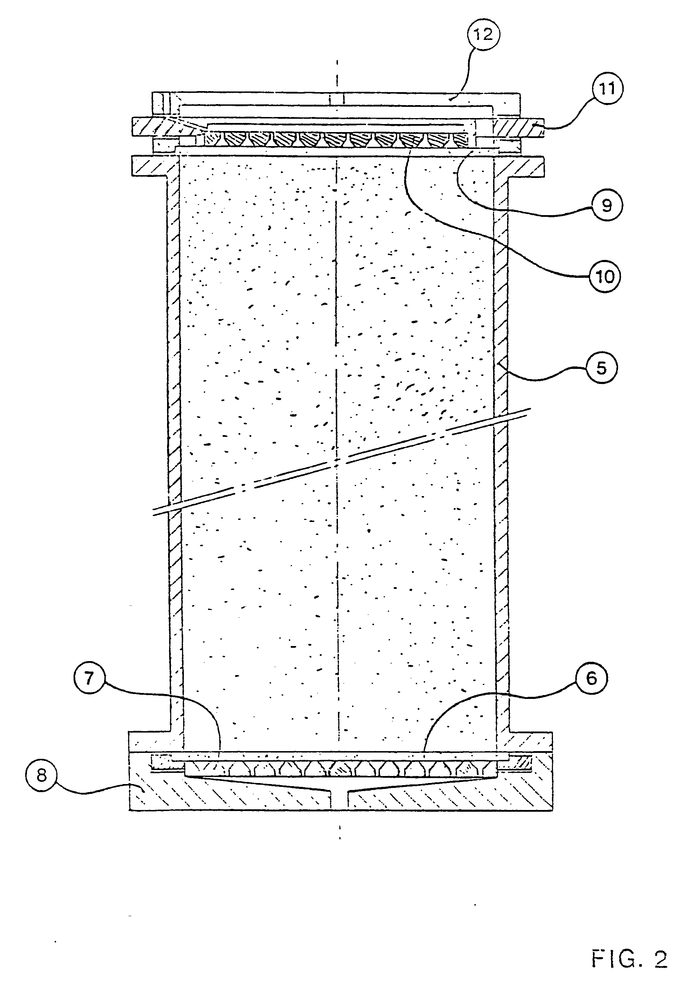

Sur la fig. 2, la colonne 5 qui a été désolidarisée de la buse de compression 4 représentée sur la fig. 1 comporte à sa place le couvercle supérieur 12 muni du boîtier d'injection 11 à l'intérieur duquel se trouve la plaque alvéolaire de distribution 10 située immédiatement au-dessus du disque de billes frittées 9. L'étanchéité au niveau du raccordement du couvercle supérieur 12 au boîtier d'injection 11 et au niveau du raccordement du boîtier d'injection 11 à la colonne 5 est réalisée au moyen de joints plats par exemple en téflon.

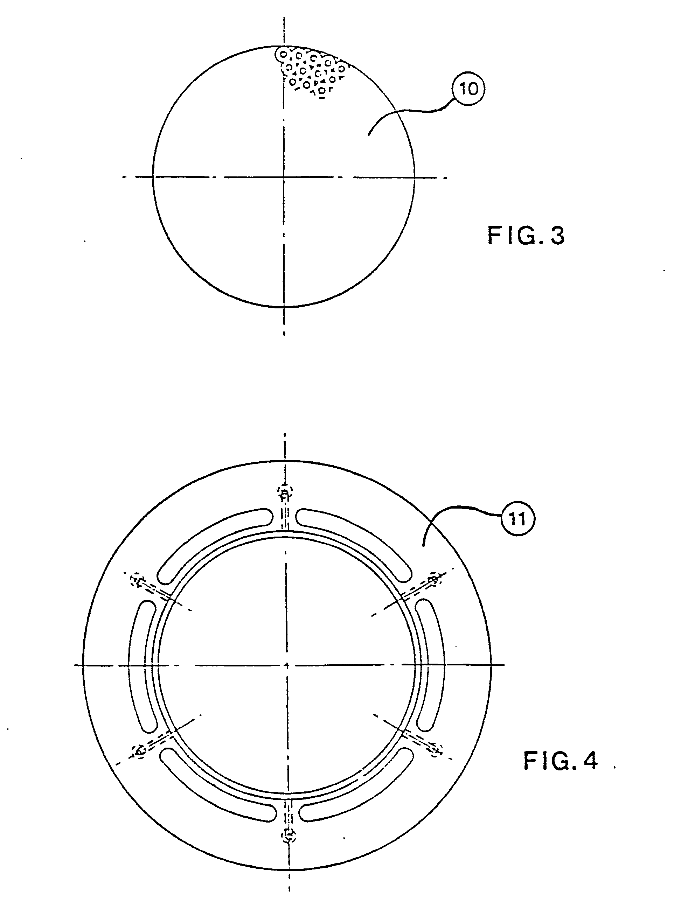

Sur la fig. 3, la plaque alvéolaire 10 est un ensemble de trous à double conicité de façon à former des alvéoles jointives ou non.

Sur la fig. 4, le boîtier d'injection 11 est représenté sans sa plaque alvéolaire, les six trous en pointillé représentent les six arrivées latérales qui irriguent la plaque alvéolaire entre ces six trous sont représentées les six zones en forme de haricots qui sont irriguées par l'arrivée centrale du solvant situé sur le couvercle supérieure 12 afin de former un tube de solvant qui gaine la colonne intérieurement.

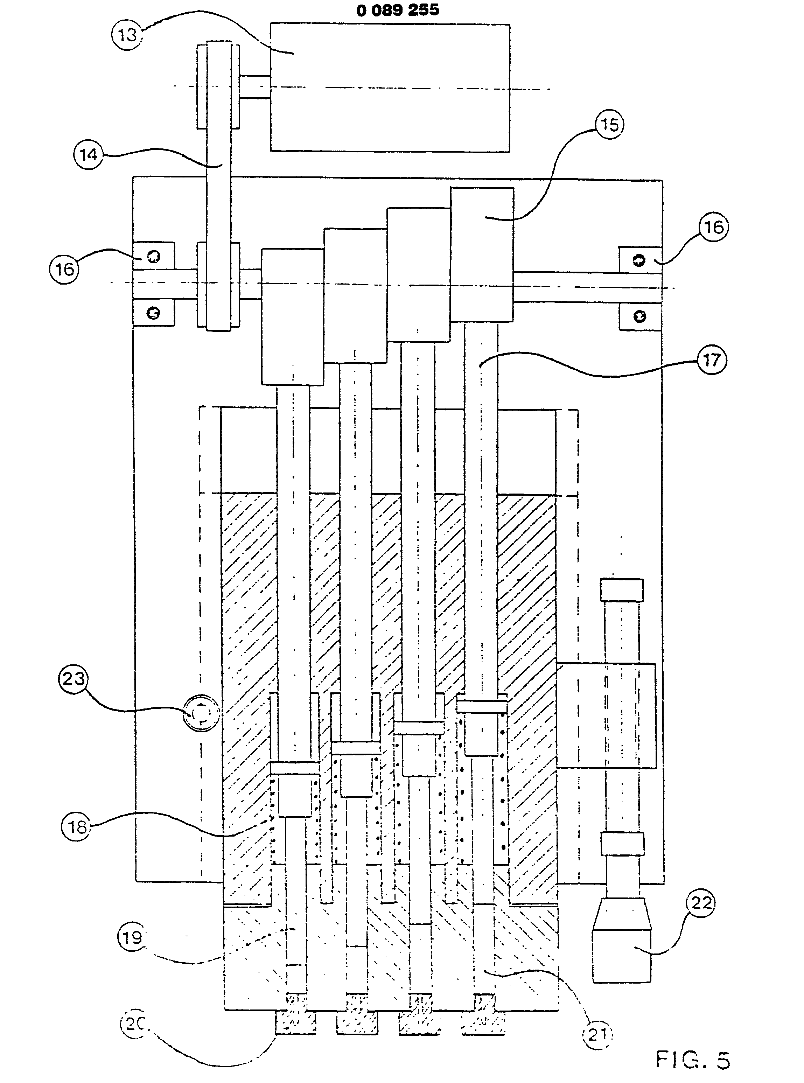

La fig. 5 représente la pompe de chromatographie à quatre pistons réglables en débit pendant le fonctionnement. Un moteur 13 qui peut être électrique ou pneumatique entraîne par la courroie 14 l'arbre à came 15 fixé sur des paliers 16.

Les pistons d'entraînement 17 ne sont pas solidaires des cames ce qui permet de régler leur course par rapport au bâti. Les pistons de compression 19 sont solidaires des pistons d'entraînement 17 et sont munis d'un ressort de rappel 18.

Le solvant est comprimé dans la chambre de compression 21 par le piston de compression 19.

Le solvant entre et sort de la chambre de compression 21 par l'intermédiaire du double clapet d'aspiration-refoulement 20. La partie hachurée de la fig. 5 qui représente le bloc pistons et têtes de pompe peut être translatée par rapport à la partie non hachurée qui représente le bloc moteur et arbre à came d'une longueur égale à la profondeur de la chambre de compression 21 au moyen du vernier 22. Une vis de blocage 23 des glissières du bloc permet à l'ensemble d'assurer une rigidité au système de réglage.

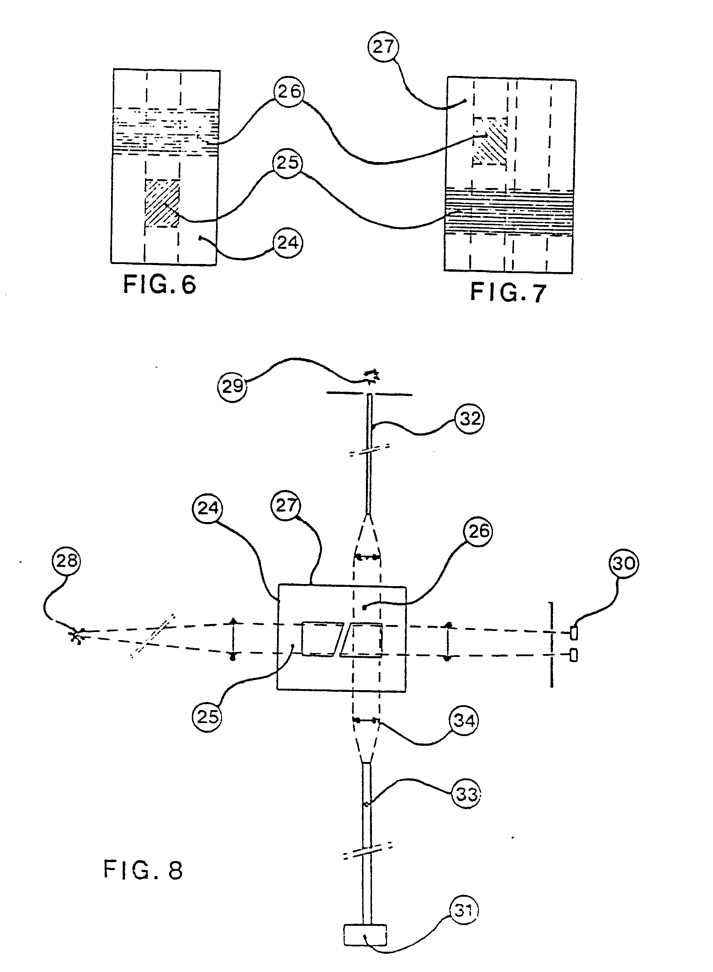

Sur les fig. 6, 7 et 8, 24 représente la face avant de la cuve de détection, 27 la face de côté. 25 représente le chemin optique du rayonnement infrarouge pour la détection réfractométrique. 26 est le chemin optique du rayonnement ultraviolet pour la détection absorptiométrique. 28 représente la source infrarouge et 30 les cellules de détection. 29 est la source ultraviolette et 31 le photomultiplicateur de détection. Le rayonnement ultraviolet chemine à travers une fibre optique 32 de 200 μm par exemple de diamètre ou plus et traverse la cuve en un rayonnement parallèle à partir d'un système de lentille 34 pour reconverger vers une fibre optique 33 ayant un diamètre par exemple de 1 000 μm ou plus.

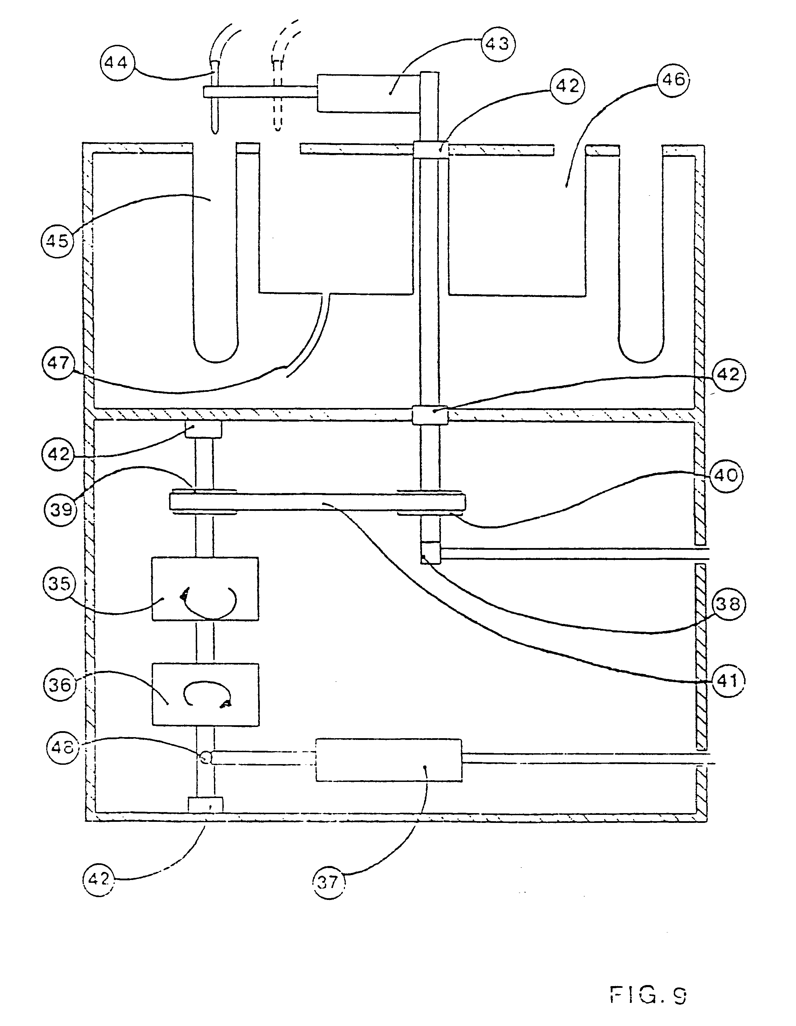

La fig. 9 représente le collecteur de fraction entièrement pneumatique et antidéflagrant. Le vérin pneumatique et antidéflagrant. Le vérin pneumatique 37 simple effet actionne dans un mouvement de va-et-vient l'ergot 48 suivant un angle de rotation réglable à partir de la course du vérin 37. Ce mouvement de va-et-vient de l'ergot 48 situé sur l'axe fixé au bâti par des roulements à billes 42, provoque un simple balancement du premier cliquet 36, mais une rotation point par point et dans un seul sens du deuxième cliquet 35 placé en opposition. Cette rotation est transmise à la poulie 39 puis à la poulie 40 par l'intermédiaire de la courroie 41.

La poulie 40 va entraîner en rotation un axe creux fixé au bâti par des roulements à billes 42. Cet axe creux est alimenté en pression par un raccord tournant 38 afin d'actionner le vérin 43 qui positionne l'écoulement du solvant 44 au-dessus des récipients de collecte 45 ou du bac d'évacuation 46. Le bac d'évacuation 46 est muni d'un tube d'évacuation 47.

On décrira par la suite un procédé de mise en œuvre du dispositif de chromatographie objet de l'invention. Sur la colonne 5 on a fixé le couvercle inférieur 8 et on fixe à la partie supérieure la buse de compression 4 cet ensemble est alors rempli de la phase stationnaire mise en suspension par exemple dans le solvant d'élution.

Le vérin 1 muni de son étrier 2 est fixé sur la buse de compression 4. Le corps solide non poreux 3 est alors en position haute. Le vérin 1 actionne le corps solide non poreux 3 qui descend dans la buse de compression 4 et comprime la phase stationnaire. Le corps solide non poreux 3 est alors en position basse, cette position basse est toujours à l'intérieur du corps de la buse de compression, elle n'est jamais située à l'intérieur de la colonne 5 puisque sa limite inférieure est située à la base de la buse de compression 4 c'est-à-dire à la partie supérieure de la colonne 5. La compression de la phase stationnaire est fonction du diamètre des particules mais aussi des caractères spécifiques et physiques des différentes phases stationnaires. En effet, on ne peut comprimer une cellulose de la même façon que l'on comprime une silice.

Une fois la compression réalisée, la pression exercée par le vérin 1 est stoppée, la colonne 5 est désolidarisée de la buse de compression 4, la tête d'injection 12 et 11 est fixée sur la colonne 5. La colonne C est alors intégrée dans le système de chromatographie.

Les quatre têtes de pompe 20 de la pompe P sont reliées à la tête d'injection par une combinaison de vannes en acier inoxydable à trois ou quatre voies pour permettre soit le changement de solvant, soit l'élution ascendante de la colonne. Une des quatre têtes de pompe est reliée à l'arrivée centrale du couvercle 12 alors que les trois autres têtes de pompe sont reliées aux arrivées latérales.

Côté aspiration, ces trois têtes de pompes sont munies chacune d'une vanne trois voies qui permet d'aspirer soit du solvant, soit du soluté à injecter. Pendant l'élution les quatre têtes de pompe débitent du solvant sur la tête d'injection à travers l'arrivée centrale et les arrivées latérales. Pendant l'injection l'arrivée centrale est toujours alimentée en solvant alors que les arrivées latérales sont alimentées en soluté. Il n'y a donc pas pendant l'injection de variation de débit, et surtout l'injection n'est pas réalisée en « Stop-flow » ce qui a pour effet d'éliminer totalement les à-coups de pression néfastes au moment de l'injection.

Naturellement dans une version automatisée, l'exploitation d'un tel système est extrêmement simple puisqu'elle se limite à tourner des vannes à trois voies au lieu de gérer un arrêt de pompe, suivre l'injection puis remettre en route la pompe.

Un tel mode d'application met clairement en évidence l'économie réalisée par rapport aux systèmes existants. En effet, au lieu d'avoir un système pour l'élution et un système pour l'injection, on a un système qui combine les deux grâce aux quatre têtes de pompe.

Après avoir traversé la colonne C, l'éluant est dirigé vers la cuve de double détection D puis vers le collecteur de fractions CF. On dispose de façon avantageuse entre D et CF des vannes qui permettent soit le recyclage du soluté, soit le recyclage du solvant vers le réservoir de pompage. Ces vannes seront actionnées en fonction des indications que donnera la cuve de détection. Par exemple, si les solutés sont parfaitement séparés, les vannes ne sont pas actionnées, l'éluant va dans le collecteur. Si les solutés sont mal séparés, la vanne de recyclage du soluté est actionnée et l'éluant repart vers la tête de colonne. Enfin, si la cuve de détection ne donne aucune indication, la vanne de recyclage du solvant est actionnée, l'éluant est renvoyé vers le réservoir de pompage.

Dans le cas où la séparation des solutés est jugée satisfaisante, l'éluant est envoyé vers le collecteur qui distribue au moyen du vérin 37 le soluté dans les différents récipients de collecte. Les zones situées entre deux solutés ou les fins de solutés sont dirigés vers le bac d'évacuation 46 au moyen du vérin 43.

**Revendications**

1. Système de chromatographie préparatoire en phase liquide comprenant une colonne (5) sous forme d'un tube cylindrique muni à sa partie inférieure d'un couvercle (8) comportant un disque permettant le passage des liquides ou des gaz et arrêtant les particules solides, une pompe, un dispositif de détection et un collecteur de fractions relié au dispositif de détection, caractérisé par le fait qu'il comprend :

a) un dispositif de remplissage destiné à être relié à la colonne par une buse de compression (4) dont la hauteur minimale est égale au tiers de la hauteur de la colonne et comprenant un vérin (1) actionnant un corps solide non poreux (3) permettant de comprimer la phase stationnaire remplissant ladite colonne par l'intermédiaire de la buse de compression (4),

b) une tête d'injection reliée à la pompe et destinée à être fixée sur la colonne après son remplissage, ladite tête d'injection comprenant une paroi inférieure constituée par une plaque percée d'alvéoles (10) associée à un disque de billes frittées (9) disposé sous la plaque alvéolaire et un boîtier d'injection (11) d'un diamètre inférieur à la tête d'injection muni de plusieurs arrivées latérales de soluté entraînant une dispersion radiale du soluté dans le boîtier d'injection situé au-dessus de la plaque alvéolaire, ladite tête d'injection comportant sur la face supérieure une arrivée centrale de solvant et des moyens permettant au solvant de contourner le boîtier d'injection pour que le solvant forme un film le long de la paroi intérieure de la colonne.

2. Système selon la revendication 1, caractérisé par le fait que le corps solide non poreux est actionné par un vérin hydraulique, pneumatique, à vis ou autre.

3. Système de chromatographie selon la revendication 1, caractérisé par le fait que la pompe comprend un bloc comportant quatre pistons ou têtes de pompe (19), disposé sur des glissières, et susceptible d'être translaté d'une longueur égale à la profondeur d'une chambre de tête de pompe au moyen d'un vernier (22).

4. Système selon la revendication 1, caractérisé par le fait que la cuve de détection comprend quatre faces polies dont deux sont en quartz de qualité infrarouge et les deux autres sont en quartz de qualité ultraviolet, et un bloc de double détection basse tension, la haute tension de la lampe source des rayonnements ultraviolets étant renvoyée à l'extérieur au moyen de fibres optiques.

5. Procédé de mise en œuvre d'une chromatographie préparative en phase liquide, caractérisé par le fait que dans un premier temps on permet le passage des liquides et des gaz en arrêtant les particules solides sur un poste de remplissage comportant une buse de compression (4) dont la hauteur minimale est égale au tiers de la hauteur de colonne tandis qu'un vérin actionne un corps solide non poreux (3), que l'on comprime la phase stationnaire par l'intermédiaire de la buse de compression de telle façon à ce que le corps solide non poreux se trouve, en position basse, toujours à l'intérieur du corps de la buse d'injection, que la pression exercée est stoppée et la colonne (5) désolidarisée de la buse d'injection et que l'on fixe une tête d'injection du type décrit à la revendication 1, ladite tête d'injection comprenant des moyens permettant au solvant de contourner le boîtier d'injection pour que le solvant forme un film le long de la paroi intérieure de la colonne, que l'on relie à la tête d'injection une pompe du type prévu à la revendication 3, l'une des quatre têtes de pompe étant reliée à l'arrivée centrale de la tête d'injection et les trois autres têtes de pompe étant reliées aux arrivées latérales, que l'on injecte au moyen de ladite pompe le solvant par l'arrivée centrale située sur la face supérieure de la tête d'injection le solvant contournant le boîtier d'injection et formant un tube de solvant le long de la paroi intérieure de la colonne et que l'on injecte par les arrivées latérales le soluté se dispersant de façon radiale dans le boîtier d'injection et se répartissant de façon uniforme sur la plaque alvéolaire pour diffuser à travers le disque de billes frittées.

6. Procédé selon la revendication 14, caractérisé par le fait qu'après avoir traversé la colonne, l'éluant est dirigé sur la cuve de détection puis vers un collecteur de fraction.

**Claims**

1. A preparative liquide chromatography system consisting of a column (5) in the form of a cylindrical tube equipped at its lower part with a cover (8) which consists of a disc which allows the passage of liquids or gases and stops solid particles, a pump, a detecting device and a fraction collector linked to the detecting device, characterized in that it consists of :

a) a filling device intended to be connected to the column through a compression nozzle (4) of which the minimum height is equal to a third of the height of the column and consisting of a jack (1) which drives a non-porous solid body (3) which enables the stationary phase filling the said column to become compressed by means of the compression nozzle (4),

b) an injection head connected to the pump and intended to be fixed on the column after being filled, the said injection head consisting of a lower surface, which consists of a honeycombed perforated plate (10) joined to a sintered bead disc (9) arranged below the honeycombed plate, and an injection sell (11), of a diameter lower than the injection head, equipped with several lateral inlets of solute involving a radial dispersion of the solute in the injection shell situated about the honeycombed plate, the said injection head comprising on its upper surface a central inlet for the solvent and means which enable the solvent to go round the injection shell so that the solvent forms a film along the inner surface of the column.

2. The system according to Claim 1, characterized in that the non-porous solid body is driven by a hydraulic, pneumatic, screw or other type of jack.

3. The chromatography system according to Claim 1, characterized in that the pump consists of a block comprising four pistons or pump heads (19), arranged on slides and capable of being translated by a length equal to the depth of a pump head chamber by means of a vernier (22).

4. The system according to Claim 1, characterized in that the detection cell consists of four polished faces of which two are made of infrared quality quartz and the other two are made of ultraviolet quality quartz, and a low voltage double detection block, the high voltage of the ultraviolet radiation source lamp being returned to the outside by means of optical fibres.

5. A process for carrying out a preparative liquid chromatography, characterized in that initially, the passage of liquids and gases is allowed, stopping solid particles, to a filling section consisting of a compression nozzle (4) of which the minimum height is equal to a third of the height of the column, while a jack drives a non-porous solid body (3), the stationary phase is compressed by means of the compression nozzle so that the non-porous solid body is in the lower position, still within the body of the injection nozzle, the pressure applied is stopped and the column (5) is separated from the injection nozzle and an injection head of the type described in Claim 1 is fixed, the said injection head comprising means which allow the solvent to go round the injection shell so that the solvent forms a film along the inner surface of the column, a pump provided for in Claim 3 is connected to the injection head, one of the four heads of the pump being connected to the central inlet of the injection head and the three other heads of the pump being connected to the lateral inlets, the solvent is injected by means of the said pump through the central inlet situated on the upper face of the injection head, the solvent going round the injection shell and forming a solvent tube along the inner surface of the column. and the solute, which disperses itself radially in the injection shell and distributes itself uniformly in the honeycombed plate to diffuse across the sintered bead disc, is injected through the lateral inlets.

6. The process according to Claim 5, characterized in that after passing through the column, the eluant is directed to the detection cell and then towards a fraction collector.

**Patentansprüche**

1. System für die präparative Chromatographie in flüssiger Phase, umfassend eine Kolonne (5) in Form eines zylindrischen Rohrs, das an seinem unteren Teil mit einem Verschluß (8) versehen ist, welcher eine Scheibe umfaßt, die den Durchtritt von Flüssigkeiten oder Gasen gestattet und feste Teilchen zurückhält, eine Pumpe, eine Detektor und einen Fraktionen-Kollektor, der mit dem Detektor verbunden ist, dadurch gekennzeichnet, daß es umfaßt :

a) eine Fülleinrichtung, die mit der Kolonne über eine Kompressions-Düse (4) verbunden werden kann, dessen Höhe mindestens ein Drittel der Höhe der Kolonne beträgt, und welche umfaßt eine Hebevorrichtung (1), die einen nicht-porösen Festkörper (3) betätigt und es ermöglicht, die in die Kolonne eingefüllte stationäre Phase unter Mitwirkung der Kompressions-Düse (4) zu komprimieren,

b) einen Injektionskopf, der mit der Pumpe verbunden und dazu bestimmt ist, auf der Kolonne nach dem Füllen befestigt zu werden, welcher Injektionskopf umfaßt eine Innenwand, die aus einer mit Zellen durchbrochenen Platte (10) besteht, die mit einer über der zellförmigen Platte angeordneten Scheibe (9) aus Glasfritten-Kügelchen in Beziehung steht, und eine Injektionsgehäuse (11) von kleinerem Durchmesser als der Injektionskopf, welches mit mehreren seitlichen Lösungs-Einlaßöffnungen versehen ist und eine radiale Verteilung der Lösung in dem über der zellförmigen Platte angeordneten Injektionsgehäuse bewirkt, wobei der Injektionskopf auf der Oberseite eine zentrale Lösungsmittel-Einlaßöffnung und Mittel aufweist, welche es dem Lösungsmittel gestatten, das Injektionsgehäuse zu umgehen, damit das Lösungsmittel entlang der Innenwand der Kolonne einen Film ausbildet.

2. System nach Anspruch 1, dadurch gekennzeichnet, daß der nicht-poröse Festkörper mit einer hydraulischen pneumatischen, Schrauben- oder anderen Hebevorrichtung betätigt wird.

3. System nach Anspruch 1, dadurch gekennzeichnet, daß die Pumpe einen Block aufweist, welcher vier Kolben oder Pumpenköpfe (19) umfaßt, die auf Führungen angeordnet sind und mit Hilfe eines Nonius (22) um eine Länge verschoben werden können, die der Tiefe einer Kammer des Pumpenkopfes entspricht.

4. System nach Anspruch 1, dadurch gekennzeichnet, daß die Detektor-Küvette vier polierte Seiten umfaßt, von denen zwei aus Quarz von Infrarot-Qualität und die beiden anderen aus Quarz von Ultraviolett-Qualität bestehen, und einen Niederspannungs-Doppeldetektionsblock, wobei die Hochspannung der als Quelle für Ultraviolett-Strahlen verwendeten Lampe mit Hilfe von optischen Fasern wieder nach außen geleitet wird.

5. Verfahren zur Durchführung einer präparativen Chromatographie in flüssiger Phase, dadurch gekennzeichnet, daß man bei einer Einfülleinrichtung, welche eine Kompressions-Düse (4) umfaßt, dessen Höhe mindestens ein Drittel der Höhe der Kolonne beträgt, den Durchtritt von Flüssigkeiten und Gasen unter Zurückhaltung der festen Teilchen gestattet, während eine Hebevorrichtung einen nicht-porösen Festkörper (3) betätigt, die stationäre Phase unter Mitwirkung der Kompressions-Düse derart komprimiert, daß sich der nicht-poröse Festkörper in der unteren Stellung immer noch im Inneren der Kompressions-Düse befindet, die Druckbeaufschlagung beendet, die Kolonne (5) von den Kompressions-Düse trennt und einen Injektionskopf gemäß Anspruch 1 befestigt, welcher Injektionskopf Mittel umfaßt, die es dem Lösungsmittel gestatten, das Injektionsgehäuse zu umgehen, damit das Lösungsmittel entlang der Innenwand der Kolonne einen Film ausbildet, den Injektionskopf mit einer Pumpe gemäß Anspruch 3 verbindet, wobei einer der vier Pumpenköpfe mit der zentralen Einlaßöffnung des Injektionskopfes und die drei anderen Pumpenköpfe mit den seitlichen Einlaßöffnungen verbunden sind, daß man mit Hilfe der genannten Pumpe durch die zentrale Einlaßöffnung, die sich auf der Oberseite des Injektionskopfes befindet, das Lösungsmittel einspritzt, welches das Injektionsgehäuse umgeht und einen Lösungsmittelschlauch entlang der Innenwand der Kolonne ausbildet, und daß man durch die seitlichen Einlaßöffnungen Lösung einspritzt, die sich radial in dem Injektionsgehäuse verteilt und sich gleichmäßig auf der zellförmigen Platte aufteilt, um durch die Scheibe aus Glasfritten-Kügelchen zu diffundieren.

6. Verfahren nach Anspruch 5, dadurch gekennzeichnet, daß das Eluat nach dem Durchlaufen der Kolonne zu der Detektor-Küvette und dann zu einem Fraktionen-Kollektor geleitet wird.

FIG. 1

FIG. 2

FIG. 3

FIG. 4

0 089 255

FIG. 5

4

FIG.6

FIG.7

FIG. 8

FIG. 9

P

PR

C

D

UV

IR

CF